(19) Europäisches Patentamt
European Patent Office
Office européen des brevets

(11) **EP 1 569 013 B1**

(12) **EUROPEAN PATENT SPECIFICATION**

(45) Date of publication and mention
of the grant of the patent:
**14.04.2010  Bulletin 2010/15**

(51) Int Cl.:
*G02B 1/04* (2006.01)          *C08F 20/18* (2006.01)
*C08F 220/18* (2006.01)        *C08F 299/04* (2006.01)

(21) Application number: **05004347.0**

(22) Date of filing: **28.02.2005**

(54) **Curable composition for optical parts**

Härtbare Zusammensetzung für optische Teile

Compositions ducissables pour elements optiques

(84) Designated Contracting States:
**DE FR GB**

(30) Priority: **27.02.2004   JP 2004053255**
            **19.04.2004   JP 2004122532**

(43) Date of publication of application:
**31.08.2005   Bulletin 2005/35**

(73) Proprietor: **NIPPON SHOKUBAI CO., LTD.**
**Osaka-shi, Osaka 541 (JP)**

(72) Inventors:
• **Awaji, Toshio**
 **Kawanishi-shi**
 **Hyogo (JP)**
• **Mori, Kaoru**
 **Kishiwada-shi**
 **Osaka (JP)**
• **Fukada, Akihiko**
 **Nishinomiya-shi**
 **Hyogo (JP)**
• **Yoshimune, Masanori**
 **Suita-shi**
 **Osaka (JP)**

(74) Representative: **Müller-Boré & Partner**
**Patentanwälte**
**Grafinger Strasse 2**
**81671 München (DE)**

(56) References cited:
**EP-A- 1 070 682          WO-A-93/21010**
**US-A1- 2003 129 385**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a curable composition for optical parts, and more particularly, to a curable composition for forming optical parts, which are transparent and hardly cause coloration, denaturation, and deterioration, even due to light from a light source having an emission wavelength distribution extending from the short wavelength region of visible light to the ultraviolet region.

Transparent plastics have excellent processability in forming as compared with transparent inorganic materials such as glass, and therefore, they have preferably been used for various applications such as optical members, illumination members, and automobile members.

As materials to prepare a transparent plastic having excellent mechanical strength and processability in forming, curable (meth) acrylic compositions have been known EP-A-1 070 682 describes a radiation curable resin composition. Furthermore, there is disclosed optical parts formed of a curable (meth)acrylic composition containing dimethacrylate of bisphenol A modified with ethylene oxide, ester diacrylate of hydroxypivalic acid and neopentyl glycol, and phenoxy (ethoxy)ethyl acrylate (e.g., see Japanese Patent Application Publication No. 6-263831).

However, the transparent plastic formed of the disclosed curable (meth)acrylic composition has an aromatic hydrocarbon structure, so that it does not have a satisfactory level of light resistance to light from a light source having an emission wavelength distribution extending from the short wavelength region of visible light to the ultraviolet region.

As described above, the transparent plastic obtained by curing a curable (meth) acrylic composition still has a low level of colorless transparency and light resistance, in respect of discoloration with time, as compared with transparent inorganic materials such as glass, and, for example, when such a plastic is tried to be used for optical parts for use in outdoors where they are directly exposed to sunlight, such as solar cells and outdoor electric bulletin boards, or optical parts such as light-emitting diodes, optical cables, and displays utilizing a light source having an emission wavelength distribution extending from the short wavelength region of visible light to the ultraviolet region, there remains a great problem in respect of discoloration and denaturation with time.

In addition, there is disclosed a photo-curable composition comprising an alkylene (oxy) di (meth) acrylate, a specific photopolymerization initiator, and a specific ultraviolet absorbing agent at a specific ratio (e.g., see Japanese Patent No. 3,055,068).

However, the disclosed curable (meth) acrylic composition, although it has relatively excellent colorless transparency and light resistance, is neither satisfactory in forming inconvenience, dimensional stability, and the like for those having a short polyoxyalkylene chain, nor satisfactory in water resistance and the like of a cured product thereof for those having a long polyoxyalkylene chain.

Therefore, the development of a transparent plastic has strongly been desired, which not only has extremely excellent colorless transparency and light resistance at the same level as that of transparent inorganic materials, but also has excellent dimensional stability, formability, and water resistance of a cured product thereof.

It is an object of the present invention to provide a curable (meth) acrylic composition for forming optical parts, which are transparent and hardly cause coloration, denaturation, and deterioration, even due to light from a light source having an emission wavelength distribution extending from the short wavelength region of visible light to the ultraviolet region, and has excellent dimensional stability and formability, and water resistance of a cured product thereof.

In order to solve the above problem, the present inventors have intensively studied.

First, regarding the prior art composition comprising a (meth)acrylic acid ester of a compound having two or more hydroxy groups in one molecule, in order to find factors for coloration, denaturation, and deterioration of a cured product thereof, due to light from a light source having an emission wavelength distribution extending from the short wavelength region of visible light to the ultraviolet region, the present inventors have studied the kinds and contents of components contained in the composition, the preparation conditions for these components, and the like.

As a result, the present inventors have found the following facts:

(1) The use of a (meth)acrylic acid ester of a compound having two or more hydroxy groups in one molecule and containing no aromatic hydrocarbon structure makes it possible to prevent coloration, denaturation, and deterioration due to light from a light source having an emission wavelength distribution extending from the short wavelength region of visible light to the ultraviolet region;

(2) A minor amount of sulfonic acid and/or a sulfonic acid ester contained in the prior art composition comprising a (meth) acrylic acid ester of a compound having two or more hydroxy groups in one molecule is a factor for coloration, denaturation, and deterioration due to light from a light source having an emission wavelength distribution extending from the short wavelength region of visible light to the ultraviolet region;

(3) The incorporation of an ether structure represented by the following general formula (1):

$$-(OCH_2\text{-}CHR^1)_n-\qquad(1)$$

wherein n is in the range of 1 to 100 and $R^1$ is at least one selected from the group consisting of hydrogen, methyl, and ethyl, into the composition makes it possible to remarkably prevent coloration, denaturation, and deterioration due to light from a light source having an emission wavelength distribution extending from the short wavelength region of visible light to the ultraviolet region.

The present inventors have further found that a curable composition for optical parts having extremely excellent colorless transparency and light resistance at the same level as that of transparent inorganic materials can be obtained by making the content of an ether structure in a composition comprising a (meth)acrylic acid ester of a compound having two or more hydroxy groups in one molecule at 5% by weight or higher, and making the content of sulfonic acid and/or a sulfonic acid ester in the composition at 100 ppm or lower in terms of sulfur atom content.

In addition, the present inventors have found that a curable composition for optical parts having further excellent colorless transparency and light resistance can be obtained by using as the (meth) acrylic acid ester (A) of a compound having two or more hydroxy groups in one molecule and containing no aromatic hydrocarbon structure, a (meth)acrylic acid ester of a compound having no hydrogen atom at beta positions relative to the hydroxy groups (i.e., no hydrogen atom on the carbon atom to which the hydroxy group is attached).

In addition, the present inventors have also found that the use of a (meth) acrylic acid ester of a compound containing an ether structure represented by the above general formula (1) and having two or more hydroxy groups in one molecule as the (meth) acrylic acid ester (A) of a compound having two or more hydroxy groups in one molecule and containing no aromatic hydrocarbon structure makes it possible to remarkably improve light resistance by the incorporation of an ether structure and prevent a decrease in water resistance and an increase in water absorption rate of a cured product by the incorporation of an ether linkage into a polymerizable component rather than in an unreacted component.

Further, the use of a (meth) acrylic acid ester of an adduct of a compound having two or more hydroxy groups in one molecule with at least one alkylene oxide selected from the group consisting of ethylene oxide, propylene oxide, and butylene oxide as the (meth) acrylic acid ester (A) of a compound having two or more hydroxy groups in one molecule and containing no aromatic hydrocarbon structure makes it possible to provide a curable composition for optical parts which hardly cause coloration, denaturation, and deterioration due to light from a light source having an emission wavelength distribution extending from the short wavelength region of visible light to the ultraviolet region, and exhibit prevention of a decrease in water resistance and an increase in water absorption rate of a cured product thereof, and have excellent strength properties.

The reason that a minor amount of sulfonic acid and/or a sulfonic acid ester is contained in the prior art composition comprising a (meth)acrylic acid ester of a compound having two or more hydroxy groups in one molecule is as follows: when a compound having two or more hydroxy groups in one molecule is converted into a (meth)acrylate, it has become a general and common knowledge to carry out a dehydration condensation method using a sulfonic acid catalyst (particularly, p-toluenesulfonic acid) as a catalyst from the viewpoints of a preparation cost and the like, and finally, a minor amount of a sulfonic acid catalyst unavoidably remains, even by a washing step or a distillation step. At present, the preparation of a (meth) acrylic acid ester of a compound having two or more hydroxy groups in one molecule by a method other than a dehydration condensation method using a sulfonic acid catalyst (e.g., a transesterification method using a metal alcoholate or the like as a catalyst) is hardly carried out on an Industrial level from the viewpoints of a preparation cost and the like.

Further, the present inventors have found that the incorporation of a polymer and/or a copolymer (B) of a (meth) acrylic acid ester into the composition makes it possible to solve problems, while retaining light resistance, such as forming inconvenience and dimensional stability, due to shrinkage at the time of curing.

In addition, the use of a polymer and/or a copolymer of a (meth)acrylic acid ester having a reactive group polymerizable with the (meth) acrylic acid ester (A) of a compound having two or more hydroxy groups in one molecule and containing no aromatic hydrocarbon structure as the polymer and/or copolymer (B) of a (meth)-acrylic acid ester makes it possible to provide a curable composition for optical parts which have more excellent strength properties.

That is, the curable composition for optical parts of the present invention comprises a (meth) acrylic acid ester (A) of a compound having two or more hydroxy groups in one molecule and containing no aromatic hydrocarbon structure, wherein the content of an ether structure represented by the above general formula (1) in the composition is 5% by weight or higher, and the content of sulfonic acid and/or a sulfonic acid ester in the composition is 100 ppm or lower in terms of sulfur atom content, wherein the (meth)acrylic acid ester (A) of a compound having two or more hydroxy groups in one molecule and containing no aromatic hydrocarbon structure is a (meth)acrylic acid ester of an adduct of a compound having two or more hydroxy groups in one molecule with at least one alkylene oxide selected from the group consisting of ethylene oxide, propylene oxide, and butylene oxide.

The present invention will be explained below in detail; however, the scope of the present invention is not restricted by the following explanation, and the present invention can appropriately be practiced after alternation or modification in such a range that the gist of the present invention is not deviated, regarding embodiments other than those described below.

In the present invention, the (meth)acrylic acid ester (A) of a compound having two or more hydroxy groups in one molecule and containing no aromatic hydrocarbon structure is not particularly limited, so long as it contains no aromatic hydrocarbon structure and it is a (meth) acrylic acid ester of an adduct of a compound having two or more hydroxy groups in one molecule with at least one alkylene oxide selected from the group consisting of ethylene oxide, propylene oxide, and butylene oxide.

Examples of the (meth)acrylic acid ester of a compound having two or more hydroxy groups in one molecule and containing no aromatic hydrocarbon structure include mono(meth)acrylates or di(meth)acrylates of:

alkanediols such as ethylene glycol, propylene glycol, 1,2-butanediol, 1,3-butanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tri-decanediol, 1,14-tetradecanediol, 1,15-pentadecanediol, 1,16-hexadecanediol, 3-methyl-1,5-pentanediol, 2,4-diethyl-1,5-pentanediol, 1,2-cyclohexanediol, 1,3-cyclohexanediol, 1,4-cyclohexanediol, tricyclodecanedimethanol, cyclohexanedimethanol, hydrogenated bisphenolA,neopentylglycol, and butylethylpropanediol;
mono- or di-esters of neopentyl glycol and hydroxypivalic acid; and
β,β,β'β'-tetramethyl-2,4,8,10-tetraoxaspiro-[5,5]undecane-3,9-dienol

Additional examples include mono(meth)acrylates or poly(meth)acrylates of trimethylolethane, trimethylolpropane, trimethylolbutane, trimethylolhexane, ditrimethylolpropane, pentaerythritol, dipentaerythritol, glycerin, and polyglycerin.

Among these, (meth) acrylates of compounds having two or more hydroxy groups in one molecule and having no hydrogen atom at beta positions relative to the hydroxy groups are particularly preferable because of particularly high resistance to deterioration and discoloration due to light, for example, mono- or di (meth) - acrylates of alkanediols such as neopentyl glycol and butylethylpropanediol, mono- or di-esters of neopentyl glycol and hydroxypivalic acid, and β,β,β',β'-tetramethyl-2,4,8,10-tetraoxaspiro[5,5]undecane-3,9-dienol; and mono (meth) acrylates or poly (meth) acrylates of trimethylolethane, trimethylolpropane, trimethylolbutane, trimethylolhexane, ditrimethylolpropane, pentaerythritol, and dipentaerythritol.

The process for preparing the (meth) acrylic acid ester (A) of a compound having two or more hydroxy groups in one molecule and containing no aromatic hydrocarbon structure is not particularly limited, preferable examples of which include a method of preparing the ester by the dealcoholation reaction of a polyol and a (meth) - acrylic acid ester (i.e., a transesterification method), and a method of preparing the ester by the dehydration reaction of a polyol and a (meth) acrylic acid (i.e., a dehydration condensation method).

When the transesterification method is carried out, the molar ratio of a polyol and a (meth)acrylic acid ester to be charged (i.e., hydroxy groups in the polyol : the (meth)acrylic acid ester) is preferably 1 : 1 to 1 : 20, more preferably 1 : 1.5 to 1 : 10, and still more preferably 1 : 2 to 1 : 5.

When the transesterification method is carried out, examples of a catalyst include alkali metal alcoholates, magnesium alcoholates, aluminum alcoholates, titanium alcoholates, dibutyltin oxide, and anion exchange resins. The amount of a catalyst to be used is preferably 0.01 to 10 parts by weight, more preferably 0.05 to 5 parts by weight, and still more preferably 0.1 to 3 parts by weight, relative to 100 parts by weight as the total amount of reactants to be charged. After the reaction, the catalyst is preferably removed.

When the transesterification method is carried out, a solvent may be used. Examples of a solvent which can be used include pentane, cyclopentane, hexane, cyclohexane, methylcyclohexane, heptane, cycloheptane, octane, isooctane, benzene, toluene, and cymene. The amount of a solvent to be used is preferably 1 to 70 parts by weight, more preferably 5 to 50 parts by weight, and still more preferably 10 to 30 parts by weight, relative to 100 parts by weight as the total amount of reactants to be charged.

When the transesterification method is carried out, the reaction temperature is preferably 50°C to 150°C, more preferably 70°C to 140°C, and still more preferably 90°C to 130°C.

When the dehydration condensation method is carried out, the molar ratio of a polyol and a (meth) - acrylic acid to be charged (i.e., hydroxy groups in the polyol : the (meth)acrylic acid) is preferably 1 : 1 to 1 : 5, more preferably 1 : 1.01 to 1 : 2, and still more preferably 1 : 1.05 to 1 : 1.5.

When the dehydration condensation method is carried out, examples of a catalyst include acid catalysts such as sulfuric acid, hydrochloric acid, phosphoric acid, p-toluenesulfonic acid, benzenesulfonic acid, methanesulfonic acid, trifluoromethanesulfonic acid, and cation exchange resins. Among them, in order to satisfactorily attain the advantageous effects of the present invention, cation exchange resins are preferable. Examples of the cation exchange resin include Amberlist (registered trademark) and Amberlite (Registered trademark) available from Rohm & Haas, and Diaion (registered trademark) available from Mitsubish Chemical Co., Ltd. In order to satisfactorily attain the advantageous effects of the present invention, it is more preferable to use the cation exchange resin after the resin is sufficiently washed with an organic solvent such as toluene or ethanol and then with water so that a sulfur content is not discharged. The amount of a catalyst to be used is preferably 0.01 to 10 parts by weight, more preferably 0.05 to 5 parts by weight, and still more preferably 0.1 to 3 parts by weight, relative to 100 parts by weight as the total amount of reactants to be charged. After the reaction, the catalyst is preferably removed.

When the dehydration condensation method is carried out, examples of a solvent include pentane, cyclopentane, hexane, cyclohexane, methylcyclohexane, heptane, cycloheptane, octane, isooctane, benzene, toluene, and cymene. The amount of a solvent to be used is preferably 1 to 70 parts by weight, more preferably 5 to 50 parts by weight, and still more preferably 10 to 30 parts by weight, relative to 100 parts by weight as the total amount of reactants to be charged.

When the dehydration condensation method is carried out, the reaction temperature is preferably 50°C to 150°C, more preferably 70°C to 140°C, and still more preferably 90°C to 130°C.

The ratio of the (meth) acrylic acid ester (A) of a compound having two or more hydroxy groups in one molecule and containing no aromatic hydrocarbon structure to be contained in the curable composition for optical parts of the present invention is not particularly limited. The (meth)acrylic acid ester (A) of a compound having two or more hydroxy groups in one molecule and containing no aromatic hydrocarbon structure is preferably contained in the composition at a ratio of 10% to 95% by weight, more preferably 20% to 90% by weight, and still more preferably 30% to 85% by weight, relative to the total weight of the curable composition for optical parts. The incorporation of the (meth)acrylic acid ester (A) of a compound having two or more hydroxy groups in one molecule and containing no aromatic hydrocarbon structure into the composition at a ratio as described above makes it possible to satisfactorily exhibit the advantageous effects of the present invention and particularly provide a cured product having an excellent balance between heat resistance, dimensional stability, and formability. When the ratio is outside the above range, there is a possibility that the advantageous effects of the present invention will not satisfactorily be attained.

The ether structure represented by the above general formula (1) in the curable composition for optical parts of the present invention may be contained in any form in the composition and is not particularly limited. For example, the ether structure may be contained as a non-reactive component, or may be contained as a reactive component.

When contained as a non-reactive component, the ether structure can be contained in a form of, for example, ethylene glycol dialkyl ethers, polyethylene glycol dialkyl ethers, propylene glycol dialkyl ethers, polypropylene glycol dialkyl ethers, butylene glycol dialkyl ethers, polybutylene glycol dialkyl ethers, ethylene glycol monoalkyl ether acetates, polyethylene glycol monoalkyl ether acetates, propylene glycol monoalkyl ether acetates, polypropylene glycol monoalkyl ether acetates, butylene glycol monoalkyl ether acetates, and polybutylene glycol monoalkyl ether acetates;

adducts of diols (e.g., 1,3-propanediol, 1,4-butanediol, 1,6-hexanediol, neopentyl glycol, mono- or di-esters of neopentyl glycol and hydroxypivalic acid, butylethylpropanediol, hydrogenated bisphenol A) with at least one alkylene oxide selected from the group consisting of ethylene oxide, propylene oxide, and butylene oxide; and

adducts of polyols (e.g., trimethylolethane, trimethylolpropane, trimethylolbutane, trimethylolhexane, ditrimethylolpropane, pentaerythritol, dipentaerythritol, glycerin, polyglycerin) with at least one alkylene oxide selected from the group consisting of ethylene oxide, propylene oxide, and butylene oxide.

These compounds having an ether structure as a non-reactive component may be used alone or in combination.

The introduction of an ether structure as an reactive component is preferable because a decrease in water resistance and an increase in water absorption rate of a cured product due to the ether structure can be prevented. For example,

mono(meth)acrylates and di(meth)acrylates of polyethylene glycol, polypropylene glycol, polybutylene glycol, random ring-opened polymers or block ring-opened polymers of ethylene oxide and propylene oxide, polyalkylene glycol, and the like;

methoxyethyl (meth)acrylate, ethoxyethyl (meth)-acrylate, methoxyethoxyethyl (meth)acrylate, ethoxyethoxyethyl (meth) acrylate, methoxypolyethylene glycol (meth)acrylate, and the like;

mono(meth)acrylates or di(meth)acrylates of adducts of glycols containing no aromatic hydrocarbon structure (e.g., mono-or di-esters of 1,3-propanediol, 1,4-butanediol, 1,6-hexanediol, neopentyl glycol, mono- or di-esters of neopentyl glycol and hydroxypivalic acid, butylethylpropanediol, cyclohexanedimethanol, hydrogenated bisphenol A) with at least one selected from the group consisting of ethylene oxide, propylene oxide, and butylene oxide;

mono(meth)acrylates or poly(meth)acrylates of adducts of polyols (e.g., trimethylolethane, trimethylolpropane, trimethylolbutane, trimethylolhexane, ditrimethylolpropane, pentaerythritol, dipentaerythritol, glycerin, polyglycerin) with at least one selected from the group consisting of ethylene oxide, propylene oxide, and butylene oxide;

monofunctional vinyl ethers such as methoxyethyl vinyl ether, ethoxyethyl vinyl ether, methoxyethoxyethyl vinyl ether, ethoxyethoxyethyl vinyl ether, methoxypolyethylene glycol vinyl ether, 2-hydroxyethyl vinyl ether, 4-hydroxybutyl vinyl ether, diethylene glycol monovinyl ether, and polyethylene glycol vinyl ether;

polyfunctional vinyl ethers such as ethyleneglycol divinyl ether, diethylene glycol divinyl ether, polyethylene glycol divinyl ether, propylene glycol divinyl ether, butylene glycol divinyl ether, bisphenol A alkylene oxide divinyl ether, bisphenol F alkylene oxide divinyl ether, trivinyl ethers of ethylene oxide adducts of trimethylolpropane, tetravinyl ethers of ethylene oxide adducts of ditrimethylolpropane, tetravinyl ethers of ethylene oxide adducts of pentaerythritol, and hexavinyl ethers of ethylene oxide adducts of dipentaerythritol;

can be contained in the composition.

These compounds having an ether structure as a reactive component may be used either alone or in combination.

In particular, (meth)acrylates of compounds having two or more hydroxy groups in one molecule, containing no aromatic hydrocarbon structure, and having no hydrogen atom at beta positions relative to the hydroxy groups are most preferable because of their particularly high resistance to discoloration and deterioration due to light and excellent water resistance, for example, mono (meth) acrylates or poly (meth) - acrylates of adducts of neopentyl glycol, butylethylpropanediol, mono- or di-esters of neopentyl glycol and hydroxypivalic acid, β,β,β',β'-tetramethyl-2,4,8,10-tetraoxaspiro [5,5]undecane-3,9-dienol, polyols such as trimethylolethane, trimethylolpropane, trimethylolbutane, trimethylolhexane, ditrimethylolpropane, pentaerythritol, and dipentaerythritol, with at least one alkylene oxide selected from ethylene oxide, propylene oxide, and butylene oxide. These (meth)acrylates may be used either alone or in combination.

The curable composition for optical parts of the present invention may contain at least one polymerizable monomer other than the (meth) acrylic acid ester (A) with a compound having two or more hydroxy groups in one molecule and containing no aromatic hydrocarbon structure.

Examples of the polymerizable monomer include:

monofunctional (meth)acrylates such as methyl (meth) acrylate, ethyl (meth)acrylate, propyl (meth) acrylate, butyl (meth)acrylate,2-ethylhexyl(meth)acrylate, n-nonyl (meth)acrylate, lauryl (meth)acrylate, cyclohexyl (meth)acrylate, cyclohexylmethyl (meth)acrylate, (meth)acrylic acid, adamantyl (meth)acrylate, norbonyl (meth)acrylate, N,N-dimethylaminoethyl (meth)acrylate, and butyl α-hydroxymethylacrylate;

monofunctional (meth)acrylamides such as N,N-dimethyl(meth)acrylamide, and N-methylol(meth)acrylamide;

monofunctional vinyl ethers such as methyl vinyl ether, ethyl vinyl ether, propyl vinyl ether, butyl vinyl ether, 2-ethylhexylvinyl ether, n-nonyl vinyl ether, lauryl vinyl ether, cyclohexyl vinyl ether, and chloroethyl vinyl ether;

monofunctional N-vinyl compounds such as N-vinylpyrrolidone, N-vinylcaprolactam, N-vinyl-N-methylformamide, N-vinylimidazole, N-vinylformamide, and N-vinylacetamide;

monofunctional vinyl compounds such as styrene, α-methylstyrene, vinyltoluene, allyl acetate, vinyl acetate, vinyl propionate, and vinyl benzoate;

monofunctional α,β-unsaturated compounds such as maleic anhydride, maleic acid, dimethyl maleate, diethyl maleate, monomethyl maleate, monoethyl maleate, fumaric acid, dimethyl fumarate, diethyl fumarate, monomethyl fumarate, monoethyl fumarate, itaconic anhydride, itaconic acid, dimethyl itaconate, diethyl itaconate, monomethyl itaconate, monoethyl itaconate, methylenemalonic acid, dimethyl methylenemalonate, monomethyl methylenemaloate, cinnamic acid, methyl cinnamate, ethyl cinnamate, crotonic acid, methyl crotonate, and ethyl crotonate;

polyfunctional vinyl ethers such as hexanediol divinyl ether, trimethylolpropane trivinyl ether, ditrimethylolpropane tetravinyl ether, glycerin trivinyl ether, pentaerythritol tetravinyl ether, dipentaerythritol pentavinyl ether, and dipentaerythritol hexavinyl ether;

polyfunctional vinyl compounds such as divinylbenzene;

polyfunctional (meth)acrylates other than the (meth)acrylic acid ester (A) of a compound having two or more hydroxy groups in one molecule and containing no aromatic hydrocarbon structure, such as di (meth) acrylates of alkylene oxide adducts of bisphenol A; and

These polymerizable monomers may be used either alone or in combination.

The curable composition for optical parts of the present invention may preferably contain a polymer and/or a copolymer (B) of a (meth)acrylic acid ester.

The polymer and/or copolymer (B) of a (meth) acrylic acid ester is not particularly limited, so far as it is a polymer obtained by polymerizing monomer components containing 50 mole% or more of a (meth) acrylic acid ester and/or (meth)acrylic acid.

As a polymerizable monomer which can be used as a starting material of the polymer and/or copolymer (B) of a (meth) acrylic acid ester, in addition to the above monofunctional (meth)acrylates, monofunctional (meth)acrylamides, monofunctional vinyl ethers, monofunctional N-vinyl compounds, monofunctional vinyl compounds, and monofunctional α,β-unsaturated compounds, a minor amount of a polyfunctional monomer may also be used.

The polymer and/or copolymer of (meth) acrylic acid ester may be contained in the composition either alone or in combination.

It is particularly preferable from the viewpoint of optical properties of optical parts obtained by curing the composition of the present composition that the polymer and/or copolymer (B) of a (meth)acrylic acid ester has a reactive group polymerizable with the (meth)-acrylic acid ester (A) of a compound having two or more hydroxy groups in one molecule and containing no aromatic hydrocarbon structure.

Examples of a process for preparing the polymer and/or copolymer (B) of a (meth)acrylic acid ester, having a reactive group polymerizable with the (meth) - acrylic acid ester (A) of a compound having two or more hydroxy groups in one molecule and containing no aromatic hydrocarbon structure include, but are not particularly limited to:

(1) a method of reacting a polymerizable monomer containing a glycidyl group with a copolymer of a polymerizable monomer containing a carboxyl group and a (meth)acrylic acid ester, or a method of reacting a polymerizable monomer containing a carboxyl group with a copolymer of a polymerizable monomer containing a glycidyl group and a (meth)acrylic acid ester;

(2) a method of reacting a polymerizable monomer containing an isocyanate group with a copolymer of a polymerizable monomer containing a hydroxy group and a (meth)acrylic acid ester, or a method of reacting a polymerizable monomer containing a hydroxy group with a copolymer of a polymerizable monomer containing an isocyanate group and a (meth)acrylic acid ester;

(3) a method of reacting a polymerizable monomer containing a vinyl ether group and other polymerizable groups with a copolymer of a polymerizable monomer containing a hydroxy group and/or a carboxyl group and a (meth) acrylic acid ester, or a method of reacting a polymerizable monomer containing a hydroxy group and/or a carboxyl group with a copolymer of a polymerizable monomer containing a vinyl ether group and other polymerizable groups and a (meth)acrylic acid ester;

(4) a method of reacting a polymerizable monomer containing an acid anhydride group with a copolymer of a polymerizable monomer containing a hydroxy group and a (meth)acrylic acid ester, or a method of reacting a polymerizable monomer containing a hydroxy group with a copolymer of a polymerizable monomer containing an acid anhydride group and a (meth)acrylic acid ester; and

(5) a method of partially polymerizing a polymerizable monomer composition containing a polyfunctional monomer to make some of the double bonds remain on a side chain of a polymer.

The ratio of the polymer and/or copolymer (B) of a (meth) acrylic acid ester to be contained in the curable composition for optical parts of the present invention is not particularly limited, and is preferably 5% to 50% by weight, more preferably 10% to 40% by weight, and still more preferably 15% to 30% by weight, relative to the total weight of the curable composition for optical parts. The incorporation of the polymer and/or copolymer (B) of a (meth) acrylic acid ester at a ratio as described above makes it possible to satisfactorily attain the advantageous effects of the present invention and particularly provide prevention of shrinkage at the time of curing and excellent formability. When the ratio is outside the above range, there is a possibility that the advantageous effects of the present invention will not satisfactorily be attained.

The curable composition for optical parts of the present invention may contain at least one polymerizable oligomer.

Examples of the polymerizable oligomer include:

polyester (meth)acrylates obtained by the reaction of a saturated or unsaturated polybasic acid or an acid anhydride thereof (e.g., maleic acid, succinic acid, adipic acid, phthalic acid, isophthalic acid, terephthalic acid, tetrahydrophthalic acid), and a saturated or unsaturated polyhydric alcohol (e.g., ethylene glycol, propylene glycol, neopentyl glycol, 1,4-butanediol, 1,6-hexanediol, 3-methyl-1,5-pentanediol, polyethylene glycol, polypropylene glycol, 1,4-dimethylolbenzene, trimethylolpropane, pentaerythritol), and (meth)acrylic acid;

epoxy (meth) acrylates obtained by the reaction of a polyfunctional epoxy compound (e.g., bisphenol A diglycidyl ether, hydrogenated bisphenol A diglycidyl ether, 3,4-epoxycyclohexylenyl-3',4'-epoxycyclohexene carboxylate, hexahydrophthalic acid diglycidyl ether, triglycidyl isocyanurate) and (meth)acrylic acid;

oxetane (meth)acrylates obtained by the reaction of a polyfunctional oxetane compound (e.g., 4,4'-bis-[(3-ethynyl-3-oxetanyl)methoxymethyl]biphenyl, bis-[(3-ethynyl-3-oxetenyl)methyl]ester of 1,4-benzenedicarboxylic acid, 9,9-bis[2-methyl-4-{2-(3-oxetanyl)}butoxyphenyl]fluorene,    and    9,9-bis[4[2-{2-(3-oxetanyl)}butoxy]ethoxyphenyl]fluorene) and (meth)-acrylic acid;

polyurethane (meth)acrylates obtained by the reaction of a saturated or unsaturated polyhydric alcohol (e.g., ethylene glycol, neopentyl glycol, polytetramethylene glycol, polyester polyol, polycaprolactone polyol and the like), and an organic polyisocyanate (e.g., tolylene diisocyanate, isophorone diisocyanate, xylylene diisocyanate), and a hydroxy group-containing (meth)acrylate (e.g., 2-hydroxyethyl (meth)acrylate, 2-hydroxypropyl (meth)acrylate, 1,4-butanediol mono(meth)acrylate);

polysiloxane poly(meth)acrylates obtained by the reaction of polysiloxane and (meth)acrylic acid; and

polyamide poly(meth)acrylates obtained by the reaction of polyamide and (meth)acrylic acid.

These polymerizable oligomers may be used either alone or in combination.

The curable composition for optical parts of the present invention may contain at least one additional polymer other than the polymer and/or copolymer (B) of a (meth)acrylic acid ester.

Examples of the additional polymer include polycarbonate, polystyrene, silicone resin, polyimide, polyamide, saturated polyester, polyvinyl acetate, polyvinyl chloride, polyvinyl alcohol, polyvinyl acetal, AS resin, and EVA resin. These additional polymers may be used either alone or in combination.

The curable composition for optical parts of the present invention may contain a polymerization initiator. The initiator is not particularly limited, and it may preferably contain at least one selected from the group consisting of photopolymerization initiators (C1) and thermal polymerization initiators (C2), more preferably at least one of the photopolymerization initiators (C1). The use of a photopolymerization initiator makes it possible to improve the efficiency in the production of optical parts. The combined use of a photopolymerization initiator (C1) and a thermal polymerization initiator (C2) is more preferable because it makes possible to keep at minimum a decrease in light resistance due to a photopolymerization initiator and improve the efficiency in the production of optical parts.

Examples of the photopolymerization initiator (C1) include:

acetophenone compounds such as diethoxyacetophenone, 2-hydroxy-2-methyl-1-phenylpropan-1-one, benzyl dimethyl ketal, 4-(2-hydroxyethoxy)phenyl-(2-hydroxy-2-propyl)ketone, 1-hydroxycyclohexyl phenyl ketone, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomer;

benzoin compounds such as benzoin, benzoin methyl ether, benzoin ethyl ether, benzoin isopropyl ether, and benzoin isobutyl ether;

benzophenone compounds such as benzophenone, methyl o-benzoylbenzoate, 4-phenylbenzophenone, 4-benzoyl-4'-methyl-diphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzenemethanamium bromide, and (4-benzoylbenzyl)trimethylammonium chloride;

thioxanthone compounds such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthon-9-one mesochloride; and

acylphosphine oxides such as 2;4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide.

Among these, photopolymerization initiators containing no aromatic hydrocarbon structure are preferable. As the photopolymerization initiator (C1), these initiators may be used either alone or in combination.

Examples of the thermal polymerization initiator (C2) include:

organic peroxide-type initiators such as methyl ethyl ketone peroxide, cyclohexanone peroxide, methylcyclohexanone peroxide, methyl acetoacetate peroxide, acetyl acetate peroxide, 1,1-bis(t-hexylperoxy)-3,3,5-trimethylcyclohexane, 1,1-bis(t-hexylperoxy)-cyclohexane,1,1-bis(t-butylperoxy)-3,3,5-trimethylcyclohexane, 1,1-bis(t-butylperoxy)-2-methylcyclohexane, 1,1-bis(t-butylperoxy)-cyclohexane, 1,1-bis-(t-butylperoxy)cyclododecane, 1,1-bis(t-butylperoxy)butanone, 2,2-bis(4,4-di-t-butylperoxycyclohexyl)propane, p-menthane hydroperoxide, diisopropylbenzene hydroperoxide, 1,1,3,3-tetramethylbutyl hydroperoxide, cumene hydroperoxide, t-hexyl hydroperoxide, t-butyl hydroperoxide, $\alpha,\alpha'$-bis (t-butylperoxy)diisopropylbenzene, dicumyl peroxide, 2,5-dimethyl-2,5-bis(t-butylperoxy)hexane, t-butylcumyl peroxide, di-t-butyl peroxide, 2,5-dimethyl-2,5-bis-(t-butylperoxy)hexyne-3, isobutyryl peroxide, 3,5,5-trimethylhexanoylperoxide, octanoyl peroxide, lauroyl peroxide, stearoyl peroxide, succinic acid peroxide, m-toluoylbenzoyl peroxide, benzoyl peroxide, di-n-propyl peroxydi carbonate, diisopropyl peroxydicarbonate, bis(4-t-butylcyclohexyl) peroxydicarbonate, di-2-ethoxyethyl peroxydicarbonate, di-2-ethoxyhexyl peroxydicarbonate, di-3-methoxybutyl peroxydicarbonate, di-s-butyl peroxydicarbonate, di(3-methyl-3-methoxybutyl) peroxydicarbonate, $\alpha,\alpha'$-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexylperoxyneodecanoate, t-butylperoxyneodecanoate, t-hexyl peroxypivalate, t-butyl peroxypivalate, 1,1,3,3-tetramethylbutylperoxy-2-ethyl hexanoate, 2,5-dimethyl-2,5-bis(2-ethylhexanoylperoxy) hexanoate, 1-cyclohexyl-1-methylethylperoxy-2-ethyl hexanoate, t-hexylperoxy-2-ethyl hexanoate, t-butylperoxy-2-ethyl hexanoate, t-hexylperoxyisopropyl monocarbonate, t-butyl peroxyisobutyrate, t-butyl peroxymaleate, t-butylperoxy-3,5,5-trimethyl hexanoate, t-butyl peroxylaurate, t-butylperoxyisopropyl monocarbonate, t-butylperoxy-2-ethylhexyl monocarbonate, t-butyl peroxyacetate, t-butylperoxy-m-toluyl benzoate, t-butyl peroxybenzoate, bis-(t-butylperoxy) isophthalate, 2,5-dimethyl-2,5-bis-(m-toluylperoxy)hexane, t-hexyl peroxybenzoate, 2,5-dimethyl-2,5-bis(benzoylperoxy)hexane, t-butylperoxyallyl monocarbonate, t-butyltrimethylsilyl peroxide, 3,3',4,4'-tetra(t-butylperoxycarbonyl)-benzophenone, and 2,3-dimethyl-2,3-diphenylbutane; and

azo-type initiators such as 2-phenylazo-4-methoxy-2,4-dimethylvaleronitrile, 1-[(1-cyano-1-methylethyl)azo]formamide, 1,1'-azobis(cyclohexane-1-carbonitrile), 2,2'-azobis(2-methylbutyronitrile), 2,2'-azobisisobutyronitrile, 2,2'-azobis(2,4-dimethylvaleronitrile), 2,2'-azobis(2-methylpropionamidine) dihydrochloride, 2,2'-azobis(2-methyl-N-phenylpropionamidine) dihydrochloride, 2,2'-azobis-[N-(4-chlorophenyl)-2-methylpropionamidine] dihydrochloride, 2,2'-azobis[N-(4-hydrophenyl)-2-methylpropionamidine] dihydrochloride, 2,2'-azobis[2-methyl-N-(phenylmethyl) propionamidine] dihydrochloride, 2,2'-azobis[2-methyl-N-(2-propenyl)propionamidine] dihydrochloride, 2,2'-azobis [N-(2-hydroxyethyl)-2-methylpropionamidine] dihydrochloride, 2,2'-azobis[2-(5-methyl-2-imidazolin-2-yl)propane] dihydrochloride, 2,2'-azobis[2-(2-imidazolin-2-yl)-propane] dihydrochloride, 2,2'-azobis[2-(4,5,6,7-tetrahydro-1H-1,3-diazepin-2-yl)propane] dihydrochloride, 2,2'-azobis[2-(3,4,5,6-tetrahydropyrimidin-2-yl)propane] dihydrochloride, 2,2'-azobis-[2-(5-hydroxy-3,4,5,6-tetrahydropyrimidin-2-yl)propane] dihydrochloride, 2,2'-azobis[2-[1-(2-hydroxyethyl)-2-imidazolin-2-yl]propane] dihydrochloride, 2,2'-azobis[2-(2-imidazolin-2-yl)propane], 2,2'-azobis[2-methyl-N-[1,1-bis(hydroxymethyl)-2-hydroxy ethyl]propionamide], 2,2'-azobis[2-methyl-N-[1,1-bis-(hydroxymethyl) ethyl]propionamide], 2,2'-azo-bis[2-methyl-N-(2-hydroxyethyl)propionamide], 2, 2' - azobis(2-methylpropionamide), 2,2'-azobis(2,4,4-trimethylpentane), 2,2'-azobis(2-methylpropane), dimethyl-2,2-azobis(2-methylpropionate), 4,4'-azo-bis(4-cyanopentanoic acid), and 2,2'-azobis[2-(hydroxymethyl)propionitrile].

As the photopolymerization initiator (C2), these initiators may be used either alone or in combination.

The curable composition for optical parts of the present invention may contain at least one thermal polymerization promoter together with the thermal polymerization initiator (C2).

Examples of the thermal polymerization promoter include metallic soaps such as those of cobalt, copper, tin, zinc, manganese, iron, zirconium, chromium, vanadium, calcium, and potassium salts; primary, secondary, and partially amine compounds; quaternary ammonium salts; thiourea compounds; and ketone compounds. Preferred are acetylacetone and methyl acetoacetate. These thermal polymerization promoters may be used either alone or in combination.

When the curable composition for optical parts of the present invention contains the polymerization initiator, the ratio of the polymerization initiator to be contained in the composition is preferably 0.001% to 10% by weight, more preferably 0.001% to 5% by weight, still more preferably 0.001% to 3% by weight, particularly preferably 0.001% to 2% by weight, and most preferably 0.01% to 2% by weight. When the ratio is less than 0.001% by weight, there is a possibility that polymerizability may be decreased. When the ratio exceeds 10% by weight, there is a possibility that light resistance may be decreased..

When the photopolymerization initiator (C1) and the thermal polymerization initiator (C2) are used in combination in the curable composition for optical parts of the present invention, the ratio of the contents of these initiators (i.e., the ratio of the thermal polymerization initiator to the photopolymerization initiator (by weight)) is preferably in the range of 1 to 10.0, more preferably in the range of 2 to 100, still more preferably in the range of 2 to 50, still more preferably 2 to 30, particularly preferably in the range of 3 to 20, and most preferably in the range of 5 to 20. When the ratio of the contents is less than 1, there is a possibility that the effect of improving weather resistance may be decreased, and when the ratio exceeds 100, there is a possibility that active energy-ray curability may be decreased.

If necessary, inorganic fine particles (D) may be incorporated into the curable composition for optical parts of the present invention. The inorganic fine particle can decrease the degree of shrinkage due to curing when the composition is cured, reproduce the shape and size of cracks or parts precisely as designed, and provide an improvement in heat resistance and heat conductivity. Although it depends on the kinds of optical parts prepared by using the composition of the present invention, it is essential to use an inorganic fine particle having a refractive index compatible with that of a cured product of the composition of the present invention, or "nano-fine particle" having the maximum particle diameter of 50 nm or smaller for applications in which transparency is regarded as important.

Examples of the inorganic fine particle which can be used in the curable composition for optical parts of the present invention include glass, alumina, aluminumhydroxide, fused silica, crystalline silica, ultrafine powder amorphous silica, hydrophobic ultrafine powder silica, and talc. Among them, ultrafine powder amorphous silica and hydrophobic ultrafine powder silica are preferable from the viewpoint of a balance between the respective physical properties. In particular, a nano-silica fine particle with a surface coated with a polymer is particularly preferable from the viewpoint of compatibility between the optical property and the thermal property. When used for the sealing of white LEDs, various fluorescent materials can be incorporated into the composition.

The curable composition for optical parts of the present invention may contain any other components, such as plasticizers, ultraviolet absorbers, antioxidants, inorganic fillers, antifoaming agents, thickeners, thixotropic agents, leveling agents, and release agents in such a range that the advantageous effects of the present invention are not deteriorated. In particular, the selection of a release agent becomes important in the forming of precision optical parts.

Examples of the release agent include:

metallic soaps such as zinc stearate, calcium stearate, magnesium stearate, lithium stearate, barium stearate, and sodium stearate; sulfosuccinic acid ester-type surfactants such as sodium bistridecylsulfosuccinate, sodium dioctylsulfosuccinate, sodium dihexylsulfosuccinate, sodium dicyclohexylsulfosuccinate, sodium diamylsulfosuccinate, sodium diisobutylsulfosuccinate, disodium N-octadecylsulfosuccinic acid amide, and tetrasodium N-(1,2-dicarboxyethyl)-N-octadecylsulfosuccinic acid amide;

fatty acids such as caproic acid, caprylic acid, capric acid, lauric acid, myristic acid, palmitic acid, stearic acid, arachidic acid, behenic acid, lignoceric acid, myristoleic acid, palmitoleic acid, oleic acid, linoleic acid, linolenic acid, 12-hydroxystearic acid, and ricinolic acid;

higher alcohols such as lauryl alcohol, stearyl alcohol, and behenyl alcohol;

fatty acid esters such as methyl stearate, stearyl stearate, behenyl behenate, and sorbitan monostearate;

silicone-type release agents such as KF96, KF965, KF410, KF412, KF4701, KF54, KS61, KM244F, KS702, KF725, KS707, and KS800P, all of which are products of Shin-Etsu Chemical Co., Ltd.; and

fluorine-type surfactants such as those under the trade names, Polyfox PF-136A, PF-156A, PF-151N, PF-636, PF-6320, PF-656, PF-6520, PF-651, PF-652, and PF-3320, all of which are products of Omnova Solutions, Inc.

These release agents may be used either alone or in combination. In these release agents, particularly preferred are sulfosuccinic acid ester-type surfactants, fatty acids, higher alcohols, fatty acid esters, and fluorine-type surfactants because they can exhibit releasability while keeping the transparency of a cured product.

The curable composition for optical parts of the present inventionmay contain at least one hydroxy group-containing compound as an additive for improving light resistance.

Examples of the hydroxy group-containing compound include methanol, ethanol, propanol, butanol, pentanol, 1,4-butanediol, 1,3-pentanediol, 1,4-pentanediol, 1,5-pentanediol, 1,3-hexanediol, 1,4-hexanediol, 1,5-hexanediol, 1,6-hexanediol, 1,3-heptanediol, 1,4-heptanediol, 1,5-heptanediol, 1,6-heptanediol, 1,7-heptanediol, 1,3-octanediol, 1,4-octanediol, 1,5-octanediol, 1,6-octanediol, 1,7-octanediol, 1,8-octanediol, 1,3-nonanediol, 1,4-nonanediol, 1,5-nonanediol, 1,6-nonanediol, 1,7-nonanediol, 1,8-nonanediol, 1,9-nonanediol, neopentyl glycol, hydrogenated bisphenol A, trimethylol propane, pentaerythritol, dipentaerythritol, glycerin, polyglycerin, and trimethylolpropane.

These hydroxy-containing compounds may be used either alone or in combination.

In the curable composition for optical parts of the present invention, it is important that the content of sulfonic acid and/or a sulfonic acid ester in the composition is 100 ppm or lower in terms of sulfur atom content, and the content of an ether structure in the composition is 5% by weight or higher.

The content of sulfonic acid and/or a sulfonic acid ester in the composition is preferably 50 ppm or lower, more preferably 30 ppm or lower, still more preferably 20 ppm or lower, and particularly preferably 10 ppm or lower, in terms of sulfur atom content.

The content of an ether structure in the composition is preferably 7% by weight or higher, more preferably 10% by weight or higher, still more preferably 15% by weight or higher, and particularly preferably 20% by weight or higher.

It has never been known so far that a minor amount of a sulfonic acid and/or sulfonic acid ester component contained in the prior art methacrylic resin composition is one factor for discoloration with time, that is, the presence of a sulfonic acid and/or sulfonic acid ester component has an influence on a decrease in light resistance. In addition, it has never been known that the introduction of an ether structure can prevent a decrease in light resistance. Further, it has been found that the optimization of these two factors can remarkably prevent a decrease in light resistance. Based on this knowledge obtained by the present inventors, it has been found that the reduction of the content of sulfonic acid and/or a sulfonic acid ester in the composition to an extremely low level, 100 ppm or lower, in terms of sulfur atom content, as well as the introduction of 5% by weight or higher of an ether structure into the composition, makes the composition into a material which provides a transparent plastic not only having extremely excellent colorless transparency and light resistance at the same level of that of transparent inorganic materials but also having excellent heat resistance, dimensional stability, surface hardness, and formability.

The process for preparing the curable composition for optical parts of the present invention is not particularly limited, so long as it is a process in which various preparation conditions are adjusted so as to provide the content of sulfonic acid and/or a sulfonic acid ester in the composition of 100 ppm or lower in terms of sulfur atom content, and the content of an ether structure in the composition of 5% by weight or higher.

The curable composition for optical parts of the present invention can be obtained, preferably, by mixing a (meth) acrylic acid ester (A) of a compound having two or more hydroxy groups in one molecule and containing no aromatic hydrocarbon structure, a polymer and/or a copolymer (B) of a (meth) acrylic acid ester, and other optional components. Alternatively, the composition may also be obtained by partially polymerizing a polymer and/or a copolymer (B) of a (meth)acrylic acid ester to prepare a mixture of a (meth) acrylic polymer and/or copolymer and a (meth)acrylic monomer, and further mixing a (meth)acrylic acid ester (A) of a compound having two or more hydroxy groups in one molecule and containing no aromatic hydrocarbon structure and other optional components. Further, the composition may also be prepared by obtaining a polymer and/or a copolymer of a (meth) acrylic acid ester having a functional group by partial polymerization, and mixing a methacrylate having another functional group reactive with the functional group to cause reaction, resulting in a mixture of a (meth)acrylic acid ester (A) having two or more hydroxy groups in one molecule and containing no aromatic hydrocarbon structure, a polymer and/or a copolymer (B) of a (meth) acrylic acid ester, and other optional components.

As a means for reducing the amount of sulfonic acid and/or a sulfonic acid ester in a curable composition for optical parts to 100 ppm or lower in terms of sulfur atom content, there can be mentioned the following means :

(1) avoidance of use of a sulfonic acid and/or sulfonic acid ester component at all steps in the preparation process until a curable composition for optical parts is obtained; and

(2) sufficient removal of a sulfonic acid and/or sulfonic acid ester component when the sulfonic acid and/or sulfonic acid ester component is used in the process for preparing a curable composition for optical parts.

Examples of the above means (1) include avoidance of use of sulfonic acid and/or a sulfonic acid ester as a catalyst used in the preparation of a (meth) acrylic acid ester (A) of a compound having two or more hydroxy groups in one molecule and containing no aromatic hydrocarbon structure.

As described above, in the industrial process for preparing a (meth)acrylic acid ester (A) of a compound having two or more hydroxy groups in one molecule and containing no aromatic hydrocarbon structure, it has become a general and common knowledge to carry out a dehydration condensation method using a sulfonic acid catalyst (particularly, p-toluenesulfonic acid) as a catalyst from the viewpoints of a preparation cost and the like. At present, the preparation of a (meth)-acrylic acid ester (A) of a compound having two or more hydroxy groups in one molecule and containing no aromatic hydrocarbon structure by a method other than a dehydration condensation method using a sulfonic acid catalyst (e.g., a transesterification method using a metal alcoholate or the like as a catalyst) is hardly carried out in an industrial level from the viewpoints of a preparation cost and the like. Therefore, avoidance of use of a sulfonic acid derivative as a catalyst used in the preparation of a (meth)acrylic acid ester (A) of a compound containing two or more hydroxy groups in one molecule and containing no aromatic hydrocarbon structure in the above means (1) may be disadvantageous as compared with the prior art technique in respect of a preparation cost and the like. However, the present invention can attain excellent effects which can compensate for such disadvantage, that is, the advantageous effect of providing a transparent plastic not only having extremely excellent colorless transparency and light resistance at the same level of that of transparent inorganic materials but also having excellent heat resistance, dimensional stability, surface hardness, and formability.

As a method of curing the curable composition for optical parts of the present invention to obtain a cured product thereof, there can be employed any of the conventional methods of curing a curable resin composition. For example, curing can be carried out by heating, irradiation of an active energy ray, or the like. In view of the properties of a curable (meth) acrylic resin composition and the like, it is preferable to use active energy rays, such as electromagnetic waves, ultraviolet rays, visible light, infrared rays, electron beams, and gamma rays, or heat.

In the present invention, it is preferable that a curable composition to be cured for obtaining optical parts further contains a photopolymerization initiator (C1) and a thermal polymerization initiator (C2) for the same reasons as described above, in which case curing of the composition is preferably carried out by irradiation of an active energy ray.

In the case of curing with an ultraviolet ray, it is preferable to use a light source emitting light in the wavelength range of 150 to 450 nm. As such a light source, preferred are sunlight, low-pressure mercury lamps, high-pressure mercury lamps, ultrahigh-pressure mercury lamps, metal halide lamps, gallium lamps, xenon lamps, carbon arc lamps, and the like. These light sources can be used in combination with heat by infrared rays, far-infrared rays, hot air, high-frequency heating, and the like.

Curing with an electron beam may be carried out by the use of an electron beam accelerated at a voltage, the lower limit of which is preferably 10 kV or higher, more preferably 20 kV or higher, and still more preferably 30 kV or higher, and the upper limit of which is preferably 500 kV or lower, more preferably 300 kV or lower, and still more preferably 200 kV or lower. The dose of an electron beam has the lower limit of preferably 2 kGy or higher, more preferably 3 kGy or higher, and still more preferably 5 kGy or higher, and the upper limit of preferably 500 kGy or lower, more preferably 300 kGy or lower, and still more preferably 200 kGy or lower. The irradiation of an electron beam can be used in combination with heat by infrared rays, far-infrared rays, hot air, high-frequency heating, and the like.

The temperature of curing of a curable composition for optical parts by irradiation of active energy rays is not particularly limited, but is preferably -20°C to 150°C, more preferably 0°C to 120°C, and still more preferably 20°C to 100°C.

In the present invention, a curable composition for optical parts becomes a thermo-curable (meth) acrylic resin composition which is cured at room temperature or by heating by the incorporation of the above thermal polymerization initiator and, if necessary, a thermal polymerization promoter thereinto.

When a curable composition for optical parts is cured at room temperature, the lower limit of which is preferably -20°C or higher, and the upper limit of which is preferably 50°C or lower. When the curing temperature is lower than -20°C, there is a possibility that the curing speed is remarkably decreased to deteriorate productivity or that the composition is incompletely cured to abandon excellent physical properties of a cured product thereof. On the other hand, when the curing temperature is higher than 50°C, since curing proceeds rapidly, there is a possibility that inconvenience, such as foaming and cracking of a cured product, and warp of a formed product, will occur. As for the curing temperature, the lower limit is more preferably 0°C or higher, and the upper limit is more preferably 40°C or lower.

When a thermo-curable (meth) acrylic resin composition is cured by warming, the lower limit of which is preferably 40°C or higher, and the upper limit of which is preferably 180°C or lower. When the curing temperature is lower than 40°C, there is a possibility that the curing speed is remarkably reduced to deteriorate productivity or that the composition is incompletely cured to abandon excellent physical properties of a cured product. On the other hand, when the curing temperature is higher than 180°C, since curing proceeds rapidly, there is a possibility that inconvenience, such as foaming and cracking of a cured product, and warp of a formed product, will occur. As for the curing temperature, the lower limit is more preferably 50°C or higher, still more preferably 60°C or higher, and the upper limit is more preferably 150°C or lower, still more preferably 120°C or lower.

A cured product obtained by curing the curable composition for optical parts of the present invention is a (meth) acrylic resin cured product obtained by curing a (meth) acrylic resin composition comprising a (meth) - acrylic acid ester (A) of a compound having two or more hydroxy groups in one molecule and containing no aromatic hydrocarbon structure and, if necessary a polyfunctional (meth)acrylate, and the cured product has the above properties, so that it is a transparent plastic not only having extremely excellent colorless transparency and light resistance at the same level as that of transparent inorganic materials but also having excellent heat resistance, dimensional stability, surface hardness, and formability.

The present invention will be further illustrated below by way of Examples and Comparative Examples; however, the present invention is not limited thereto.

Synthesis Example 1

Into a flask equipped with a stirring device, a thermometer, a condenser, and a tube for introducing a mixed gas of air and nitrogen gas, there were placed 135 g of sufficiently dehydrated neopentyl glycol (hereinafter abbreviated as NPG in some cases), 400 g of methyl methacrylate (hereinafter abbreviated as MMA in some cases), 1.35 g of potassium t-butoxide (hereinafter abbreviated as t-BuOK in some cases), and 13.5 mg of 4-hydroxy-2,2,6,6-tetramethylpiperidine-N-oxyl (hereinafter abbreviated as 4H-TEMPO in some cases), and the mixture was stirred, the temperature of which was raised to 110°C. Only methanol produced by the reaction was distilled off, and the transesterification reaction was carried out over 4 hours. From the resulting reaction solution, unreacted MMA was distilled off, and then unreacted neopentyl glycol, neopentyl glycol monomethacrylate, and the catalyst were removed by washing with water to give neopentyl glycol dimethacrylate. This was designated as compound (M-1).

The sulfur atom content of the resulting compound (M-1) was measured by inductively coupled plasma analysis (hereinafter abbreviated as ICP in some cases), and no sulfur atom was observed.

Synthesis Example 2

Into a flask equipped with a stirring device, a thermometer, a condenser, and a tube for introducing a mixed gas of air and nitrogen gas, there were placed 311 g of 4-mole ethylene oxide adduct of neopentyl glycol (hereinafter abbreviated as NPG-4EO in some cases), 400 g of MMA, 6.22 g of dibutyltin oxide (hereinafter abbreviated as DBTO in some cases), and 31.1 mg of 4H-TEMPO, and the mixture was stirred, the temperature of which was raised to 110°C. Only methanol produced by the reaction was distilled off, and the transesterification reaction was carried out over 6 hours. From the resulting reaction solution, MMA was distilled off to give a dimethacrylate of the ethylene oxide adduct of neopentyl glycol. This was designated as compound (M-2).

The sulfur atom content of the resulting compound (M-2) was measured by ICP, and no sulfur atom was observed.

Synthesis Example 3

Into a flask equipped with a stirring device, a thermometer, a condenser, and a tube for introducing a mixed gas of air and nitrogen gas, there were placed 311 g of NPG-4EO, 400 g of MMA, 3.11 g of t-BuOK, and 31.1 mg of 4H-TEMPO, and the mixture was stirred, the temperature of which was raised to 110°C. Only methanol produced by the reaction was distilled off, and the transesterification was carried out over 4 hours. From the resulting reaction solution, MMA was distilled off to give a dimethacrylate of the ethylene oxide adduct of neopentyl glycol. This was designated as compound (M-3).

The sulfur atom content of the resulting compound (M-3) was measured by ICP, and no sulfur atom was observed.

Synthesis Example 4

Into a flask equipped with a stirring device, a thermometer, a condenser, and a tube for introducing a mixed gas of air and nitrogen gas, there were placed 311 g of NPG-4EO, 189 g of methacrylic acid (hereinafter abbreviated as MAA in some cases), 25 g of a cation exchange resin (Amberlist 15D available from ORGANO Corporation) which had been washed with toluene and water, respectively, three times, and then dried, 50 g of toluene, and 31.1 mg of 4H-TEMPO, and the mixture was stirred, the temperature of which was raised to 110°C. Water produced by the reaction was distilled off, and the dehydration esterification reaction was carried out over 6 hours. After completion of the reaction, the cation exchange resin was removed by filtration, and toluene and unreacted MAA were removed by heating under reduced pressure to give a dimethacrylate of the ethylene oxide adduct of neopentyl glycol. This was designated as compound (M-4).

A content of a sulfur atom contained in the resulting compound (M-4) was measured by ICP, and a content of a sulfur atom was 7 ppm.

Synthesis Example 5

Into a flask equipped with a stirring device, a thermometer, a condenser, and a tube for introducing a mixed gas of air and nitrogen gas, there were placed 311 g of NPG-4EO, 189 g of methacrylic acid (hereinafter abbreviated as MAA in some cases), 10 g of p-toluenesulfonic acid (hereinafter abbreviated as PTS in some cases), 50 g of toluene, and 31.1 mg of 4H-TEMPO, and the mixture was stirred, the temperature of which was raised to 110°C. Water produced by the reaction was distilled off, and the dehydration esterification reaction was carried out over 6 hours. After completion of the reaction, the procedure of washing with water, allowing to stand, and separating the aqueous layer was repeated three times, and toluene and unreacted MAA were removed by heating under reduced pressure to give a dimethacrylate of the ethylene oxide adduct of neopentyl glycol. This was designated as compound (M-5).

The sulfur atom content of the resulting compound (M-5) was measured by ICP, and it was found that the sulfur atom content was 340 ppm.

Synthesis Example 6

Into a flask equipped with a stirring device, a thermometer, a condenser, and a tube for introducing a mixed gas of air and nitrogen gas, there were placed 311 g of NPG-4EO, 400 g of ethyl acrylate, 6.22 g of DBTO, and 31.1 mg of 4H-TEMPO, and the mixture was stirred, the temperature of which was raised to 110°C. Only ethanol produced by the reaction was distilled off, and the transesterification reaction was carried out over 6 hours. From the resulting reaction solution, ethyl acrylate was distilled off to give a diacrylate of the ethylene oxide adduct of neopentyl glycol. This was designated as compound (M-6).

The sulfur atom content of the resulting compound (M-6) was measured by ICP, and no sulfur atom was observed.

Synthesis Example 7

Into a flask equipped with a stirring device, a thermometer, a condenser, and a tube for introducing a mixed gas of air and nitrogen gas, there were placed 339 g of an adduct of neopentyl glycol with 2 mole of ethylene oxide and 2 mole of propylene oxide, 400 g of MMA, 6.78 g of DBTO, and 33.9 mg of 4H-TEMPO, and the mixture was stirred, the temperature of which was raised to 110°C. Only methanol produced by the reaction was distilledoff, and the transesterification reaction was carried out over 6 hours. From the resulting reaction solution, MMA was distilled off to give a dimethacrylate of the ethylene oxide and propylene oxide adduct of neopentyl glycol. This was designated as compound (M-7) .

The sulfur atom content of the resulting compound (M-7) was measured by ICP, and no sulfur atom was observed.

Synthesis Example 8

Into a flask equipped with a stirring device, a thermometer, a condenser, and a tube for introducing a mixed gas of air and nitrogen gas, there were placed 336 g of 4-mole ethylene oxide adduct of butylethylpropanediol, 400 g of MMA, 6.72 g of DBTO, and 33.6 mg of 4H-TEMPO, and the mixture was stirred, the temperature of which was raised to 110°C. Only methanol produced by the reaction was distilled off, and the transesterification reaction was carried out 6 hours. From the resulting reaction solution, MMA was distilled off to give a dimethacrylate of the ethylene oxide adduct of butylethylpropanediol. This was designated as compound (M-8).

The sulfur atom content of the resulting compound (M-8) was measured by ICP, and no sulfur atom was observed.

Synthesis Example 9

Into a flask equipped with a stirring device, a thermometer, a condenser, and a tube for introducing a mixed gas of air and nitrogen gas, there were placed 530 g of 9-mole ethylene oxide adduct of trimethylolpropane, 600 g of MMA, 10.6 g of DBTO, and 53.0 mg of 4H-TEMPO, and the mixture was stirred, the temperature of which was raised to 110°C. Only methanol produced by the reaction was distilled off, and the transesterification reaction was carried out over 6 hours. From the resulting reaction solution, MMA was distilled off to give a trimethacrylate of 9-mole ethylene oxide adduct oftrimethylolpropane. This was designated as compound (M-9).

The sulfur atom content of the resulting compound (M-9) was measured by ICP, and no sulfur atom was observed.

Synthesis Example 10

Into a flask equipped with a stirring device, a thermometer, a condenser, and a tube for introducing a mixed gas of air and nitrogen gas, there were placed 200 g of polyethylene glycol (having a number average molecular weight of 200), 400 g of MMA, 4.0 g of DBTO, and 20.0 mg of 4H-TEMPO, and the mixture was stirred, the temperature of which was raised to 110°C. Only methanol produced by the reaction was distilled off, and the transesterification reaction was carried out over 6 hours. From the resulting reaction solution, MMA was distilled off to give polyethylene glycol dimethacrylate. This was designated as compound (M-10).

The sulfur atom content of the resulting compound (M-10) was measured by ICP, and no sulfur atom was observed.

Synthesis Example 11

Into a flask equipped with a stirring device, a thermometer, a condenser, and a tube for introducing a mixed gas of air and nitrogen gas, there were placed 487 g of 8-mole ethylene oxide adduct of neopentyl glycol (hereinafter abbreviated as NPG-8EO in some cases), 400 g of MMA, 9.74 g of DBTO, and 48.7 mg of 4H-TEMPO, and the mixture was stirred, the temperature of which was raised to 110°C. Only methanol produced by the reaction was distilled off, and the transesterification reaction was carried out over 6 hours. From the resulting reaction solution, MMA was distilled off to give a dimethacrylate of the ethylene oxide adduct of neopentyl glycol. This was designated as compound (M-11).

The sulfur atom content of the resulting compound (M-11) was measured by ICP, and no sulfur atom was observed.

Synthesis Example 12

Into a flask equipped with a stirring device, a thermometer, a condenser, and a tube for introducing a mixed gas of air and nitrogen gas, there were placed 228 g of 2-mole ethylene oxide adduct of bisphenol A, 400 g of MMA, 4.56 g of DBTO, and 22.8 mg of 4H-TEMPO, and the mixture was stirred, the temperature of which was raised to 110°C. Only methanol produced by the reaction was distilled off, and the transesterification reaction was carried out over 6 hours. From the resulting reaction solution, MMA was distilled off to give a dimethacrylate of the ethylene oxide adduct of bisphenol A. This was designated as compound (M-12).

The sulfur atom content of the resulting compound (M-12) was measured by ICP, and no sulfur atom was observed.

Synthesis Example 13

Into a flask equipped with a stirring device, thermometer, a condenser, and a tube for introducing a nitrogen gas, there were placed 190 g of MMA, 8.6 g of MAA, and 463 g of toluene, and the atmosphere in the flask was replaced with nitrogen gas, the temperature of which was raised to 70°C. A solution obtained by diluting 0.99 g of 2,2'-azobis(2,4-dimethylvaleronitrile) (V-65 available from Wako Pure Chemical Industries, Ltd.) with 50 g of toluene was then slowly added dropwise, while paying attention to heat generation. The reaction was carried out at 70°C for 3 hours and then at 90°C for 2 hours to complete radical polymerization.

Then, 0.68 g of methoquinone, 156 g of glycidyl methacrylate, and 2.71 g of tetraphenylphosphonium bromide were added, and the temperature of the flask was raised to 100°C, while being bubbled with a mixed gas of air and nitrogen gas, and the reaction was carried out until the acid value became 5 or lower. The resulting polymer solution was subjected to precipitation with n-hexane, and the n-hexane was removed under reduced pressure to give compound (P-1).

The molecular weight of the resulting compound (P-1) was measured by gel permeation chromatography (GPC), and it was found that the number average molecular weight (Mn) was 35, 000 and the weight average molecular weight (Mw) was 78,000.

In addition, the sulfur atom content of the resulting compound (P-1) was measured by ICP, and no sulfur atom was observed.

Synthesis Example 14

Into a flask equipped with a stirring device, a thermometer, a condenser, and a tube for introducing a nitrogen gas, the flask was replaced with nitrogen, there were placed 85 g of MMA, 15 g of polyethylene glycol monomethyl ether methacrylate (under the trade name, NK ester M-90G, available from Shin Nakamura Chemical Co., Ltd.), and 100 g of toluene, and the atmosphere in the flask was replaced with nitrogen gas, the temperature of which was raised to 70°C. A solution obtained by diluting 1.5 g of 2,2'-azobis(1,4-dimethylvaleronitrile) (V-65 available from Wako Pure Chemical Co., Ltd.) with 50 g of toluene was then slowly added dropwise, while paying attention to heat generation. The reaction was carried out at 70°C for 4 hours and then at 90°C for 1 hour to complete radical polymerization. The resulting polymer solution was subjected to precipitation with n-hexane, and the n-hexane was distilled off under reduced pressure to give a compound (P-2).

The molecular weight of the resulting compound (P-2) was measured by gel permeation chromatography (GPC), and it was found that the number average molecular weight (Mn) was 14,000 and the weight average molecular weight (Mw) was 25,000.

The sulfur atom content of the resulting compound (P-2) was measured by ICP, and no sulfur atom was observed.

Synthesis Example 15

Into a flask equipped with a stirring device, a thermometer, and a condenser, there were placed 145 g of tetramethoxysilane, 23.6 g of γ-methacryloxypropyltrimethoxysilane, 19 g of water, 30 g of methanol, and 5.0 g of Amberlist 15 (registered trade mark) (cation exchange resin available from Rohm & Haas Japan) which had been washed with toluene and water, respectively, three times, and then dried, and the mixture was stirred at 65°C for 2 hours to cause reaction. The condenser was then replaced with a distillation tower, the temperature of the flask was raised to 90°C, methanol was distilled off, and the ion exchange resin was filtered off to give polymerizable polysiloxane.

Into a flask equipped with a stirring device, a thermometer, a condenser, a drop inlet, and a gas introducing tube, there was placed 200 g of toluene, into which nitrogen gas was introduced, and the inner temperature was raised to 100°C, while stirring. A solution obtained by mixing 20 g of the polymerizable polysiloxane obtained above, 180 g of MMA, and 6 g of 2,2'-azobisisobutylonitrile was added dropwise through a drop inlet over 2 hours to cause polymerization. After the dropwise addition, the reaction was further carried out at the same temperature for 4 hours to give an organic polymer solution.

Then, into a flask equipped with a stirring device, a thermometer, a condenser, and two drop inlets, there were placed 200 g of butyl acetate and 50 g of methanol, and the inner temperature was adjusted to 20°C. A mixed solution containing 20 g of the organic polymer solution obtained above, 30 g of tetramethoxysilane, and 30 g of butyl acetate was added dropwise to the flask through one drop inlet, and a mixed solution containing 20 g of 25% aqueous ammonia and 20 g of methanol was added dropwise through another drop inlet over 1 hour, while stirring. After the dropwise addition, stirring was continued at the same temperature for 2 hours to give an organic polymer-composite silica fine particle dispersion (S-1).

Examples 1-15 and Comparative Examples 1-7

Curable compositions for optical parts of Examples 1 to 15 and Comparative Examples 1 to 7, which have the respective composition ratios shown in Table 1 or 2, were prepared.

The curable compositions of Examples 1 to 14 and Comparative Examples 1 to 7 were obtained as uniform solutions by sufficiently mixing at the respective ratios shown in Table 1 or 2. The curable composition of Example 15 was obtained as a curable composition containing a dispersed inorganic particle by sufficiently mixing at a ratio shown in Table 2 and then heating under reduced pressure to remove the solvent. These curable compositions were measured for the content of an ether structure and the content of sulfonic acid and/or a sulfonic acid ester by the following methods. In addition, these curable compositions were formed into sheet-shaped optical parts under the following curing method, and these formed products were measured for the yellowness index change, volume shrinkage, and water absorption by the accelerated weathering test as described below.

The results were shown in Tables 1 and 2. In Tables 1 and 2, abbreviations indicate the following compounds. D-1173: 2-hydroxy-2-methyl-1-phenylpropan-1-one (under the trade name, Dalocure 1173, available from Ciba Specialty Chemicals)

PBO: t-butyl peroxy-2-ethylhexanoate (under the trade name, Perbutyl O, available from Nippon Oil & Fats Co., Ltd.)
PMMA: poly (methyl methacrylate) (underthetrade name, Sumipex LG-6A, available from Sumitomo Chemical Co., Ltd.)
PEG200: polyethylene glycol (having an average molecular weight of 200) available from Wako Pure Chemical Industries, Ltd.
PF-656: fluorine-type surfactant (under the trade name of Polyfox available from Omnova Solutions, Inc.)
OT-100: sodium dioctylsulfosuccinate (available from Cytec Industries)
HSTA: 12-hydroxystrearic acid

<Method of measuring content of ether structure>

Into a 5 ml aluminum-sealed vial, there were placed 15 mg of each curable composition and 200 mg of 48% hydrobromic acid, and the vial was sealed via a Teflon (registered trade mark) silicone septam, and this was heated in an oven at 150°C for 2 hours to carry out the degradation reaction of hydrobromic acid. The quantitative determination of dibromoethane, 1,2-dibromopropane, 1,2-dibromobutane,1,4-bibromobutane, and the like, which are produced by the bromination of an ether structure, such as those contained in polyethylene glycol, polypropylene glycol, polybutylene glycol, polytetramethylene glycol, and the like, was carried out by gas chromatography based on a calibration curve which had been produced in advance, to determine the content of an ether structure contained in the curable composition.

<Method of measuring content of sulfonic acid and/or sulfonic acid ester>

Each curable composition was dissolved in toluene, to which water was added, and the extraction of sulfonic acid and/or a sulfonic acid salt was carried out with a separatory funnel. The aqueous layer containing sulfonic acid and/or a sulfonic acid salt was separated, and concentrated in an evaporator, from which water was further removed completely in a hot air drier, and the residue was dissolved in acetone, after which the quantitative determination of the amount of sulfonic acid was carried out by gas chromatography.
Then, water was added to the toluene layer containing the curable composition, which had been separated with the separatory funnel, and the mixture was heated at 100°C for 10 hours, while stirring, to degrade the sulfonic acid ester into sulfonic acid. This was placed into a separatory funnel, and only the aqueous layer was taken out and concentrated in an evaporator, from which water was further removed completely in a hot air drier, and the residue was dissolved in acetone, after which the quantitative determination of the amount of the sulfonic acid ester by gas chromatography. From the total of the amount of sulfonic acid, which had been obtained previously, and the amount of the sulfonic acid ester, the content of sulfonic acid and/or a sulfonic acid ester in the curable composition was obtained in terms of sulfur atom content.

<Curing method>

Thermal curing: A methacrylic resin composition containing a thermal polymerization initiator was injected into a case in which a silicone rubber spacer having a thickness of 1 mm was sandwiched with two glass plates, and then slowly cured in warm water at 60°C over 1 hour. Further, post curing was carried out in a drier at 110°C over 2 hours, and the glass plates were then removed to obtain a sheet-shaped optical part (formed product) having a thickness of 1 mm.
Ultraviolet (UV) curing: A silicone rubber spacer having a thickness of 1 mm was disposed on a glass plate, and a methacrylic resin composition containing a photopolymerization initiator was cast in the part surrounded by the spacer. This was covered with a PET film having a thickness of 250 $\mu$m, and irradiated with an ultraviolet ray having the main wavelength of 365 nm and an irradiation intensity of 43 mJ/cm$^2$. sec for 93.2 seconds using a 250 mW ultrahigh-pressure mercury lamp to obtain a sheet-shaped optical part (formed product).

<Accelerated weathering test>

Using a high energy irradiation testing machine (available from Suga Test Instrument Co., Ltd.), a set of light irradiation for 6 hours (irradiation intensity, 100 mW/cm$^2$; wavelength, 295 to 450 nm; humidity, 70%RH; temperature, 60°C) and dew condensation for 6 hours (humidity, 90%Rh or more; temperature, 30°C) was repeated in 10 cycles (i.e., 120 hours).
Using a color-difference meter (Sigma 90 system available from Nippon Densyoku Industries Co., Ltd.), the discoloration of a test piece before and after the test was measured in the transparent mode, and expressed by yellowness index change ($\Delta$YI).
The discoloration in 10 cycles of the accelerated weathering resistance test was approximately equal to the discoloration in an actual outdoor exposure test for 2.5 years.

<Method of measuring volume shrinkage>

According to JIS K 6901, the density (a) before curing and the density (b) after curing of each curable composition were measured using a specific gravity meter (automatic specific gravity meter, model D-H-01, available from Toyo Seiki Seisaku-sho, Ltd.), and the volume shrinkage was determined by the following equation.

```
Volume shrinkage (%) =

    [(density (b) after curing - density (a) before

curing) / density (b) after curing] × 100
```

<Method of measuring water absorption>

According to JIS K 6911 except that the size of a test piece was 40 mm x 40 mm x 1 mm, the mass (W1) of the test piece before water absorption and the mass (W2) of the test piece after water absorption were measured, and the water absorption was determined by the following equation.

```
Water absorption (%) =

    [(mass (W2) of test piece after water absorption

- mass (W1) of test piece before water absorption) /

mass (W1) of test piece before water absorption] × 100
```

TABLE 1

| | Comp. Ex. 1 | Comp. Ex. 2 | Comp. Ex. 3 | Ex. 1 | Ex. 2 | Ex. 3 | Ex. 4 | Ex. 5 | Ex. 6 | Ex. 7 |
|---|---|---|---|---|---|---|---|---|---|---|
| Component (1) Amount (parts by weight) | M-1 95 | M-1 80 | M-1 60 | M-2 80 | M-2 80 | M-2 80 | M-2 40 | M-3 60 | M-4 80 | M-2 60 |
| Component (2) Amount (parts by weight) | PEG200 5 | M-10 20 | M-10 20 | - - | - - | - - | M-10 40 | - - | - - | M-5 20 |
| Component (3) Amount (parts by weight) | - - | - - | PMMA 20 | PMMA 20 | PMMA 20 | PMMA 20 | PMMA 20 | PMMA 20 | PMMA 20 | PMMA 20 |
| Polymerization initiator (1) Amount (parts by weight) | D-1173 0.2 | D-1173 0.2 | D-1173 0.2 | D-1173 0.2 | - - | D-1173 0.05 | D-1173 0.2 | D-1173 0.2 | D-1173 0.2 | D-1173 0.2 |
| Polymerization initiator (2) Amount (parts by weight) | - - | - - | - - | - - | PBO 1 | PBO 1 | - - | - - | - - | - - |
| Internal release agent Amount (parts by weight) | PF-656 0.5 | PF-656 0.5 | PF-656 0.5 | PF-656 0.5 | PF-656 0.5 | PF-656 0.5 | PF-656 0.5 | PF-656 0.5 | PF-656 0.5 | PF-656 0.5 |
| Curing method Curing method | UV curing | UV curing | UV curing | UV curing | Thermal curing | UV curing | UV curing | UV curing | UV curing | UV curing |
| Sulfur atom content (ppm) | 0 | 0 | 0 | 0 | 0 | 0 | 0 | 0 | 5.6 | 68 |
| Ether structure content (%) | 5.0 | 8.6 | 8.6 | 32 | 32 | 32 | 33 | 32 | 32 | 32 |
| ΔYI | 0.45 | 0.40 | 0.45 | 0.32 | 0.31 | 0.30 | 0.25 | 0.29 | 0.34 | 0.62 |
| Volume shrinkage (%) | 13.0 | 12.8 | 10.5 | 8.4 | 8.5 | 8.5 | 8.3 | 8.4 | 8.4 | 8.4 |
| water absorption (%) | 5.2 | 2.3 | 2.8 | 3.0 | 2.8 | 2.8 | 3.4 | 2.9 | 2.9 | 2.9 |

TABLE 2

| | Ex. 8 | Ex. 9 | Ex. 10 | Ex. 11 | Ex. 12 | Comp. Ex. 4 | Ex. 13 | Ex. 14 | Ex. 15 | Comp. Ex. 5 | Comp. Ex. 6 | Comp. Ex. 7 |
|---|---|---|---|---|---|---|---|---|---|---|---|---|
| Component (1) Amount (parts by weight) | M-2 80 | M-6 80 | M-7 80 | M-8 80 | M-9 80 | M-10 80 | M-2 80 | M-11 80 | M-2 50 | M-5 80 | M-1 80 | M-12 80 |
| Component (2) Amount (parts by weight) | - - | - - | - - | - - | - - | - - | - - | - - | S-1 40 | - - | - - | - - |
| Component (3) Amount (parts by weight) | P-1 20 | PMMA 20 | PMMA 20 | PMMA 20 | PMMA 20 | P-1 20 | P-2 20 | PMMA 20 | PMMA 10 | PMMA 20 | PMMA 20 | PMMA 20 |
| Polymerization initiator Amount (parts by weight) | D-1173 0.2 | D-1173 0.2 | D-1173 0.2 | D-1173 0.2 | D-1173 0.2 | D-1173 0.2 | D-1173 0.2 | D-1173 0.2 | D-1173 0.2 | D-1173 0.2 | D-1173 0.2 | D-1173 0.2 |
| Internal release agent Amount (parts by weight) | OT-100 0.5 | OT-100 0.5 | OT-100 0.5 | OT-100 0.5 | OT-100 0.5 | OT-100 0.5 | HSTA 0.5 | PF-656 0.5 | PF-656 0.5 | PF-656 0.5 | PF-656 0.5 | OT-100 0.5 |
| Curing method | UV curing | UV curing | UV curing | UV curing | UV curing | UV curing | UV curing | UV curing | UV curing | UV curing | UV curing | UV curing |
| Sulfur atom content (ppm) | 0 | 0 | 0 | 0 | 0 | 0 | 0 | 0 | 0 | 270 | 0 | 0 |
| Ether structure content (%) | 32 | 34 | 34 | 30 | 43 | 34 | 35 | 47 | 20 | 32 | 0 | 19 |
| ΔYI | 0.49 | 0.41 | 0.25 | 0.20 | 0.19 | 0.40 | 0.30 | 0.15 | 0.14 | 4.50 | 2.10 | 3.95 |
| volume Shrinkage (%) | 8.8 | 9.5 | 8.3 | 7.9 | 7.8 | 8.5 | 8.4 | 7.5 | 5.7 | 8.5 | 10.3 | 7.7 |
| Water absorption (%) | 2.0 | 3.5 | 2.5 | 2.4 | 3.0 | 3.5 | 3.0 | 3.3 | 0.9 | 3.0 | 0.4 | 0.7 |

The present invention makes it possible to provide a curable composition for optical parts, which are transparent and hardly causes coloration, denaturation, and deterioration due to light from a light source having an emission wavelength distribution extending from the short wavelength region of visible light to the ultraviolet region, and which have excellent dimensional stability, formability, and water resistance of a cured product.

The curable composition for optical parts of the present invention is available as a material for transparent plastics not only having extremely excellent colorless transparency and light resistance at the same level as that of transparent inorganic materials but also having excellent dimensional stability, formability, and water resistance of a cured product, so that it can preferably be used for applications requiring extremely excellent colorless transparency and light resistance at the same level as that of transparent inorganic materials, for example, various applications including optical parts for use in outdoors where they are directly exposed to sunlight, such as solar cells and outdoor electric bulletin boards, and optical parts such as light-emitting diodes, optical cables, and displays utilizing a light source having an emission wavelength distribution extending from the short wavelength region of visible light to the ultraviolet region.

**Claims**

1. A curable composition for optical parts, comprising a (meth) acrylic acid ester (A) of a compound having two or more hydroxy groups in one molecule and containing no aromatic hydrocarbon structure, wherein a content of an ether structure represented by the following general formula (1):

$$-(O-CH_2-CHR^1)_n- \qquad (1)$$

wherein n is in the range of 1 to 100 and $R^1$ is at least one selected from the group consisting of hydrogen, methyl, and ethyl, in the composition is 5% by weight or higher, and a content of sulfonic acid and/or a sulfonic acid ester in the composition is 100 ppm or lower in terms of sulfur atom content, wherein the (meth)acrylic acrylic acid ester (A) of a compound having two or more hydroxy groups in one molecule and containing no aromatic hydrocarbon structure is a (meth)acrylic acid ester of an adduct of a compound having two or more hydroxy groups in one molecule with at least one alkylene oxide selected from the group consisting of ethylene oxide, propylene oxide, and butylene oxide.

2. The curable composition for optical parts according to claim 1, wherein the (meth) acrylic acid ester (A) of a compound having two or more hydroxy groups in one molecule and containing no aromatic hydrocarbon structure is a (meth) acrylic acid ester of a compound containing an ether structure represented by the general formula (1) and having two or more hydroxy groups in one molecule.

3. The curable composition for optical parts according to claim 1 or 2, wherein the compound having two or more hydroxy groups in one molecule has no hydrogen atom at beta positions relative to the hydroxy groups.

4. The curable composition for optical parts according to any of claims 1 to 3, further comprising a polymer and/or a copolymer (B) of a (meth) acrylic acid ester.

5. The curable composition for optical parts according to any of claims 1 to 4, wherein the polymer and/or copolymer (B) of a (meth)acrylic acid ester has a reactive group polymerizable with the (meth)acrylic acid ester (A) of a compound having two or more hydroxy groups in one molecule and containing no aromatic hydrocarbon structure.

6. The curable composition for optical parts according to any of claims 1 to 5, further comprising a photopolymerization initiator (C1) and a thermal polymerization initiator (C2).

7. The curable composition for optical parts according to any of claims 1 to 6, further comprising inorganic fine particles (D).

8. The curable composition for optical parts according to any of claims 1 to 7, which is used with a light source having an emission wavelength distribution extending from a short wavelength region of visible light to an ultraviolet region.

**Patentansprüche**

1. Härtbare Zusammensetzung für optische Teile, umfassend einen (Meth)acrylsäureester (A) von einer Verbindung, die zwei oder mehr Hydroxylgruppen in einem Molekül aufweist und keine aromatische Kohlenwasserstoff-Struktur enthält, wobei ein Anteil von einer Ether-Struktur, dargestellt durch die folgende allgemeine Formel (1):

$$-(O-CH_2-CHR^1)_n- \qquad (1)$$

wobei n in dem Bereich von 1 bis 100 liegt und $R^1$ mindestens eines, ausgewählt aus der Gruppe, bestehend aus Wasserstoff, Methyl und Ethyl, ist, in der Zusammensetzung 5 Gewichtsprozent oder mehr beträgt, und ein Anteil von Sulfonsäure und/oder eines Sulfonsäureesters in der Zusammensetzung 100 ppm oder weniger, bezüglich Schwefelatomanteil, beträgt, wobei der (Meth)acrylsäureester (A) von einer Verbindung, die zwei oder mehr Hydroxylgruppen in einem Molekül aufweist und keine aromatische Kohlenwasserstoff-Struktur enthält, ein (Meth)acrylsäureester von einem Addukt von einer Verbindung, die zwei oder mehr Hydroxylgruppen in einem Molekül aufweist, mit mindestens einem Alkylenoxid, ausgewählt aus der Gruppe, bestehend aus Ethylenoxid, Propylenoxid und Butylenoxid, ist.

2. Härtbare Zusammensetzung für optische Teile nach Anspruch 1, wobei der (Meth)acrylsäureester (A) von einer Verbindung, die zwei oder mehr Hydroxylgruppen in einem Molekül aufweist und keine aromatische Kohlenwasserstoff-Struktur enthält, ein (Meth)acrylsäureester von einer Verbindung ist, die eine Ether-Struktur, dargestellt durch die allgemeine Formel (1), enthält und zwei oder mehr Hydroxylgruppen in einem Molekül aufweist.

3. Härtbare Zusammensetzung für optische Teile nach Anspruch 1 oder 2, wobei die Verbindung, die zwei oder mehr Hydroxylgruppen in einem Molekül aufweist, kein Wasserstoffatom in beta-Positionen relativ zu den Hydroxylgruppen aufweist.

4. Härtbare Zusammensetzung für optische Teile nach einem der Ansprüche 1 bis 3, weiter umfassend ein Polymer und/oder ein Copolymer (B) von einem (Meth)acrylsäureester.

5. Härtbare Zusammensetzung für optische Teile nach einem der Ansprüche 1 bis 4, wobei das Polymer und/oder das Copolymer (B) von einem (Meth)acrylsäureester eine reaktive Gruppe aufweist, die mit dem (Meth)acrylsäureester (A) von einer Verbindung, die zwei oder mehr Hydroxylgruppen in einem Molekül aufweist und keine aromatische Kohlenwasserstoff-Struktur enthält, polymerisierbar ist.

6. Härtbare Zusammensetzung für optische Teile nach einem der Ansprüche 1 bis 5, weiter umfassend einen Photopolymerisations-Initiator (C1) und einen thermischen Polymerisations-Initiator (C2).

7. Härtbare Zusammensetzung für optische Teile nach einem der Ansprüche 1 bis 6, weiter umfassend anorganische feine Teilchen (D).

8. Härtbare Zusammensetzung für optische Teile nach einem der Ansprüche 1 bis 7, die mit einer Lichtquelle mit einer Emissionswellenlängen-Verteilung verwendet wird, die von einem kurzwelligen Bereich sichtbaren Lichts bis zu einem Ultraviolettbereich reicht.

**Revendications**

1. Composition durcissable pour éléments optiques, comprenant un ester d'acide (méth)acrylique (A) d'un composé ayant deux groupes hydroxy ou plus dans une molécule et ne contenant pas de structure d'hydrocarbure aromatique, dans laquelle un contenu d'une structure d'éther représentée par la formule générale (1) :

$$-(O\text{-}CH_2\text{-}CHR^1)_n- \qquad (1)$$

dans laquelle n est dans la plage de 1 à 100 et $R^1$ est au moins un choisi dans le groupe comprenant hydrogène, méthyle et éthyle, dans la composition, est de 5 % en poids ou plus et une teneur en acide sulfonique et/ou en un ester d'acide sulfonique dans la composition est de 100 ppm ou moins en terme de teneur en atomes de soufre, dans laquelle l'ester d'acide (méth)acrylique (A) d'un composé ayant deux groupes hydroxy ou plus dans une molécule et ne contenant pas de structure d'hydrocarbure aromatique est un ester d'acide (méth)acrylique d'un produit d'addition d'un composé ayant deux groupes hydroxy ou plus dans une molécule avec au moins un oxyde d'alkylène choisi dans le groupe comprenant oxyde d'éthylène, oxyde de propylène et oxyde de butylène.

2. Composition durcissable pour éléments optiques selon la revendication 1, dans laquelle l'ester d'acide méth(acrylique) (A) d'un composé ayant deux groupes hydroxy ou plus dans une molécule et ne contenant pas de structure d'hydrocarbure aromatique est un ester d'acide (méth)acrylique d'un composé contenant une structure d'éther représentée par la formule générale (1) et ayant deux groupes hydroxy ou plus dans une molécule.

3. Composition durcissable pour éléments optiques selon la revendication 1 ou 2, dans laquelle le composé ayant deux groupes hydroxy ou plus dans une molécule ne possède pas d'atome d'hydrogène aux positions bêta par rapport aux groupes hydroxy.

4. Composition durcissable pour éléments optiques selon l'une quelconque des revendications 1 à 3, comprenant en outre un polymère et/ou un copolymère (B) d'un ester d'acide (méth)acrylique.

5. Composition durcissable pour éléments optiques selon l'une quelconque des revendications 1 à 4, dans laquelle le polymère et/ou copolymère (B) d'un ester d'acide (méth)acrylique possède un groupe réactif polymérisable avec l'ester d'acide (méth)acrylique (A) d'un composé ayant deux groupes hydroxy ou plus dans une molécule et ne contenant pas de structure d'hydrocarbure aromatique.

6. Composition durcissable pour éléments optiques selon l'une quelconque des revendications 1 à 5, comprenant en outre un initiateur de photopolymérisation (C1) et un initiateur de polymérisation thermique (C2).

7. Composition durcissable pour éléments optiques selon l'une quelconque des revendications 1 à 6, comprenant en outre des particules fines inorganiques (D).

8. Composition durcissable pour éléments optiques selon l'une quelconque des revendications 1 à 7, qui est utilisée avec une source lumineuse ayant une répartition en longueur d'onde d'émission s'étendant d'une région de longueur d'onde courte de lumière visible à une région ultraviolette.

**EP 1 569 013 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1070682 A
- JP 6263831 A
- JP 3055068 B